(19) Europäisches Patentamt / European Patent Office / Office européen des brevets

(11) **EP 4 254 945 A1**

(12) **EUROPEAN PATENT APPLICATION**

(43) Date of publication:
**04.10.2023 Bulletin 2023/40**

(21) Application number: **22165477.5**

(22) Date of filing: **30.03.2022**

(51) International Patent Classification (IPC):
**H04N 9/31** (2006.01)     **G06F 3/01** (2006.01)
**G06V 20/20** (2022.01)     **G06V 40/16** (2022.01)
**G09F 19/22** (2006.01)     **G08B 13/196** (2006.01)

(52) Cooperative Patent Classification (CPC):
**H04N 9/3185; G06F 3/011; G06F 3/012;
G06F 3/017; G06V 20/52; G06V 40/10;
G06V 40/172; G08B 13/19617; G09F 19/18;
G09F 19/22; G09F 27/005; H04N 9/3147;
H04N 9/3194;** G09F 2027/001

(84) Designated Contracting States:
**AL AT BE BG CH CY CZ DE DK EE ES FI FR GB
GR HR HU IE IS IT LI LT LU LV MC MK MT NL NO
PL PT RO RS SE SI SK SM TR**
Designated Extension States:
**BA ME**
Designated Validation States:
**KH MA MD TN**

(71) Applicant: **Yokogawa Electric Corporation
Tokyo 180-8750 (JP)**

(72) Inventors:
• **CHRISTENSEN, Max La Cour
1265 Copenhagen (DK)**
• **PIESTER, Lars Martin
1265 Copenhagen (DK)**
• **SOENDERGAARD, Ulrik Ishoej
1265 Copenhagen (DK)**
• **JAKOBSEN, Thomas Westergaard
1265 Copenhagen (DK)**

(74) Representative: **2SPL Patentanwälte PartG mbB
Landaubogen 3
81373 München (DE)**

(54) **APPARATUS AND METHOD FOR CONTROLLING A PROJECTION SYSTEM**

(57)     An apparatus (10) for controlling a projection system (30) comprises at least one interface (12) for obtaining video data from one or more cameras (20) and for communicating with the projection system (30). The apparatus comprises one or more processors (14) configured to process the video data to determine a position of a person shown in the video data in an environment. The one or more processors (14) are configured to determine a projection target relative to the person based on the position of the person in the environment. The one or more processors (14) are configured to obtain additional information about the person. The one or more processors (14) are configured to control the projection system (30) to project a projection onto the projection target. The projection comprises information that depends on the additional information about the person and/or the position of the person.

Fig. 1a

## Description

## Field

Various examples of the present disclosure relate to apparatuses, methods, and computer programs for controlling a projection system, and to a system comprising such an apparatus, a projection system and one or more cameras.

## Background

Cameras have been used to detect the presence of intruders in enclosed spaces, such as warehouses or airports, for a long time. In general, human operators monitor the video feeds of multiple cameras, looking to detect the intruders in the video feed.

In addition, PIR (Passive InfraRed) detectors are used to detect the general presence of a person inside the detection area. During nighttime, non-directable floodlights are switched on upon detection of a person to illuminate the general area. In general, PIR detectors can also be triggered by animals, the presence detection is very basic, such that the exact position of the detected person or animal is not known, so that a large area is illuminated at once.

In some cases, the general detection of a person is combined with a camera-based determination of a position of the person, in order to shine a search light onto the person. However, such a search light is limited to security applications, e.g., in the context of preventing inmates from escaping from prison.

There may be a desire for an improved concept in the field of person detection.

## Summary

This desire is addressed by the subject-matter of the independent claims.

Various examples of the present disclosure are based on the finding, that the field of person detection is not only relevant with respect to security aspects, but also with respect to the aspects of conveying information to a detected person, e.g., to guide a person's path through a large building, or to provide contextual help or information. The present disclosure uses automatic camera-based person detection in combination with an algorithm for determining the position of the person in an environment. Based on a position of the person in the environment, a projection target is determined (e.g., at a nearby wall or on the floor), and information that is deemed relevant to said person is projected onto the projection target. Thus, highly relevant information can be provided to a person in a targeted manner, using the environment as projection target. The present disclosure may be used to implement a directable information projector, for the directable presentation of customized information.

Some examples of the present disclosure relate to an apparatus for controlling a projection system. The apparatus comprises at least one interface for obtaining video data from one or more cameras and for communicating with the projection system. The apparatus comprises one or more processors configured to process the video data to determine a position of a person shown in the video data in an environment. The one or more processors are configured to determine a projection target relative to the person based on the position of the person in the environment. The one or more processors are configured to obtain additional information about the person. The one or more processors are configured to control the projection system to project a projection onto the projection target. The projection comprises information that depends on the additional information about the person and/or the position of the person. By projecting information that depends on the additional information about the person (and/or their position) onto the determined projection target, the information being projected can be highly relevant to the user and can also be displayed in a manner that can easily be perceived by the user.

For example, the one or more processors may be configured to determine a pose of the person and/or an orientation of at least one body part of the person. The one or more processors may be configured to determine the projection target relative to the person, and/or the information being projected, based on the pose of the person and/or based on the orientation of the at least one body part. By determining the projection target relative to the person based on the person's pose or orientation of the body part (e.g., head), the projection can be placed such that it can be perceived by the person. For example, the one or more processors may be configured to determine the projection target such that the projection can be perceived by the person if the person looks ahead (based on their current pose or head orientation). By determining the information being projected based on the pose of the person and/or based on the orientation of the at least one body part (e.g., head), information can be given on an object being observed by the person.

In general, the projection system is designed such that the projection can be placed in different places. However, depending on the placement of the projection target, the resulting projection can be distorted, e.g., due to the angle of the projection target relative to the projection system and relative to the person, and/or due to the projection target being an uneven surface. The one or more processors may be configured to determine a position and/or orientation of a head of the person and to spatially pre-distort the projection based on the position and/or orientation of the head of the person, such that an information content of the projection is discernible by the person. In other words, corrections may be made that ensure that the information is legible (or discernible, if the information is conveyed through a graphic) by the person. Moreover, an interactive 3D effect can be generated.

The envisioned concept can, in general, be implemented using a single camera and a single projector. However, the concept is also applicable in larger spaces, with multiple cameras and/or multiple projectors. For example, the one or more processors may be configured to select one of a plurality of projectors of the projection system based on the position, based on a pose of the person, and/or based on an orientation of at least one body part of the person. The one or more processors may be configured to control the projection system to project the projection using the selected projector. For example, a projector may be selected that is suitable for projecting onto a projection target that is within the field of view of the person.

There are different places where the projection target can be placed. For example, the one or more processors may be configured to place the projection target on one of the floor, a wall of the environment, and a predetermined body part of the person. For example, the floor may be used to convey information about a path of the person, while the wall can be used to convey written information, e.g., about an object that is arranged in vicinity of the wall. A body part, e.g., the palm or back of a hand, may be used if the information should only be discernible by the person, or if the information is associated with the person but should be visible to other people (e.g., security guards).

The proposed concept may be used to provide ongoing assistance to the user. For example, the one or more processors may be configured to track the position of the person over a plurality of frames of the video data, and to update the projection target if the position of the person changes. In particular, the one or more processors may be configured to track the position of the person across video data of at least two cameras. In effect, the projection can be adjusted as the person moves around a large or contorted space.

In various examples, the one or more processors are configured to use a machine-learning model being trained using deep learning to determine the position of the person, a pose of the person and/or an orientation of at least one body part of the person based on the video data. Machine learning, and in particular deep learning, improves the determination of the position, pose or orientation, e.g., to achieve an increased precision, reliability, or versatility.

The proposed projection is, in many cases, based on the additional information about the person. Such additional information can, in particular, be gained based on the identity of the person, or based on previous whereabouts of the person, which can be tracked using a person re-identification scheme. For example, the one or more processors may be configured to identify or re-identify the person based on the video data.

In the proposed concept, the projection may be based on the identity or re-identification of the person. In particular, the identity or re-identification of the person may be used a) to decide, whether information is to be projected, and b) to determine the information to be projected.

Accordingly, with respect to a), the one or more processors may be configured to control the projection system to project the projection based on whether the identity or re-identification of the person satisfies a predefined criterion. For example, the projection may be projected if the person is a visitor (as opposed to an employee), if the person is not authorized to be at their current place (e.g., as they have wandered into a dangerous section of a production plant without a hard hat), or if the person is not recognized, and the projection may be omitted otherwise.

With respect to b), the one or more processors may be configured to determine the additional information based on the identity or the re-identification of the person. For example, the one or more processors may be configured to obtain the additional information about the person from a database comprising information about the person.

For example, the proposed system may be used to guide the person through a large space, e.g., through an airport or a large office space. The person may register at a terminal and specify their destination. The proposed system may then be used to guide the person towards the destination. For example, the one or more processors may be configured to determine a destination of the person for the additional information about the person based on the identity or re-identification of the person. The one or more processors may be configured to generate the projection with a directional pointer pointing towards the destination of the person.

In particular with respect to visual information, different persons have different needs. For example, different persons may speak (and thus read) different languages or written characters (e.g., traditional Chinese characters vs. simplified Chinese characters). Furthermore, some persons may require larger text, or some form of diopter compensation. Also, some persons are color blind, limiting their perception of information conveyed via colors. For example, the one or more processors are configured to determine information on an ability of the person to perceive visual information for the additional information about the person based on the identity or re-identification of the person. The one or more processors may be configured to determine a visual presentation of an information content of the projection based on the information on the ability of the person to perceive visual information. In particular, the one or more processors may be configured to adapt at least one of colors being used, a font size, a language being used, a character type being used, and a diopter compensation of the projection.

As pointed out above, the projection system may be used to project the projection onto different targets, e.g., walls, the floor, or body parts. These projection targets may be uneven or have an unknown angle relative to the person or projection system. Therefore, a calibration mechanism may be used to avoid distortions of the projection, as perceived by the person. For example, the one or more processors may be configured to control the projection system to project a calibration projection. The one or more processors may be configured to determine calibration information based on video data showing the calibration projection. The one or more processors may be configured to control the projection system based on the calibration information.

The proposed concept may be used in a security context as well. For example, it may be used to surveil large, dark spaces. For example, infrared cameras, i.e., cameras having an infrared emitter and being sensitive to infrared reflections, may be used to see in the dark. Accordingly, the video data may be video data of an infrared camera.

In some examples, the additional information about the person, and/or their position, may be determined using additional sensors, such as radio-frequency card readers, Bluetooth beacons etc. For example, the one more processors may be configured to determine the position of the person and/or the additional information about the person further based on sensor data of one or more further sensors.

Some examples of the present disclosure relate to a corresponding method for controlling a projection system. The method comprises processing video data of one or more cameras to determine a position of a person shown in the video data in an environment. The method comprises determining a projection target relative to the person based on the position of the person in the environment. The method comprises obtaining additional information about the person. The method comprises controlling a projection system to project a projection onto the projection target, the projection comprising information that depends on the additional information about the person and/or the position of the person.

Some examples of the present disclosure relate to a corresponding computer program having a program code for performing the above method, when the computer program is executed on a computer, a processor, processing circuitry, or a programmable hardware component.

Some examples of the present disclosure relate to another apparatus for controlling a projection system. The apparatus may be implemented similar to the apparatus presented above, albeit with a different focus. In particular, the determination of the projection target and the determination of the additional information about the person may be omitted. The apparatus comprises at least one interface for obtaining video data from one or more cameras and for communicating with the projection system. The apparatus comprises one or more processors configured to process the video data to determine a position of a person shown in the video data in an environment. The one or more processors are configured to identify or re-identify the person based on the video data. The one or more processors are configured to control the projection system to project a projection onto a projection target if the identity or re-identification of the person satisfies a pre-defined criterion. The projection target is based on the position of the person in the environment and being defined relative to the person. For example, this example may be used to implement a security system that acts depending on the identity or re-identification of the person shown in the video feed. In this configuration, the proposed concept may be used to implement a directable security beam.

Some examples of the present disclosure relate to a corresponding method for controlling a projection system. The method comprises processing video data of one or more cameras to determine a position of a person shown in the video data in an environment. The method comprises identifying or re-identifying the person based on the video data. The method comprises controlling a projection system to project a projection onto a projection target if the identity or re-identification of the person satisfies a pre-defined criterion. The projection target is based on the position of the person in the environment and being defined relative to the person.

Some examples of the present disclosure relate to a corresponding computer program having a program code for performing the above method, when the computer program is executed on a computer, a processor, processing circuitry, or a programmable hardware component.

Some examples of the present disclosure relate to a system comprising one or more cameras, a projection system, and one of the apparatuses introduced above.

For example, different types of projectors may be used as part of the projection system. For example, the projection system may comprise one or more of at least one laser projector, at least one light emitting diode-based projector, at least one moving image projector and at least one ceiling projector.

For example, the projectors themselves may enable a large projection surface, or they may be coupled with one or more servo motors that can be used to adjust the direction of the projection. For example, the projection system may comprise one or more servo motors for adjusting a projection direction of one or more projectors of the projection system.

As outlined above with respect to the apparatus, the one or more cameras may comprise one or more infrared cameras. Additionally, or alternatively, the system may further comprise one or more further sensors in addition to the one or more cameras.

## Brief description of the Figures

Some examples of apparatuses and/or methods will be described in the following by way of example only, and with reference to the accompanying figures, in which

Fig. 1a shows a block diagram of an example of an apparatus for controlling a projection system;

Figs. 1b and 1c show flow charts of examples of a method for controlling a projection system;

Fig. 2 shows a schematic diagram of an example, wherein information on a direction is projected onto the floor in front of a person;

Fig. 3 shows a schematic diagram of an example, wherein contextual information is projected onto the wall near a person; and

Fig. 4 shows a flow chart of an example of another method for controlling a projection system.

**Detailed Description**

Some examples are now described in more detail with reference to the enclosed figures. However, other possible examples are not limited to the features of these embodiments described in detail. Other examples may include modifications of the features as well as equivalents and alternatives to the features. Furthermore, the terminology used herein to describe certain examples should not be restrictive of further possible examples.

Throughout the description of the figures same or similar reference numerals refer to same or similar elements and/or features, which may be identical or implemented in a modified form while providing the same or a similar function. The thickness of lines, layers and/or areas in the figures may also be exaggerated for clarification.

When two elements A and B are combined using an "or", this is to be understood as disclosing all possible combinations, i.e., only A, only B as well as A and B, unless expressly defined otherwise in the individual case. As an alternative wording for the same combinations, "at least one of A and B" or "A and/or B" may be used. This applies equivalently to combinations of more than two elements.

If a singular form, such as "a", "an" and "the" is used and the use of only a single element is not defined as mandatory either explicitly or implicitly, further examples may also use several elements to implement the same function. If a function is described below as implemented using multiple elements, further examples may implement the same function using a single element or a single processing entity. It is further understood that the terms "include", "including", "comprise" and/or "comprising", when used, describe the presence of the specified features, integers, steps, operations, processes, elements, components and/or a group thereof, but do not exclude the presence or addition of one or more other features, integers, steps, operations, processes, elements, components and/or a group thereof.

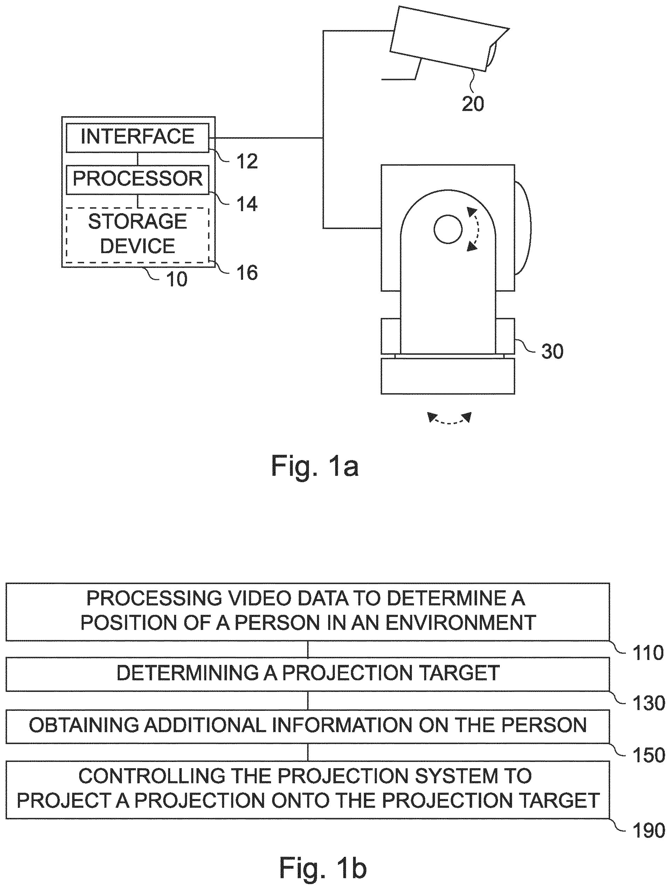

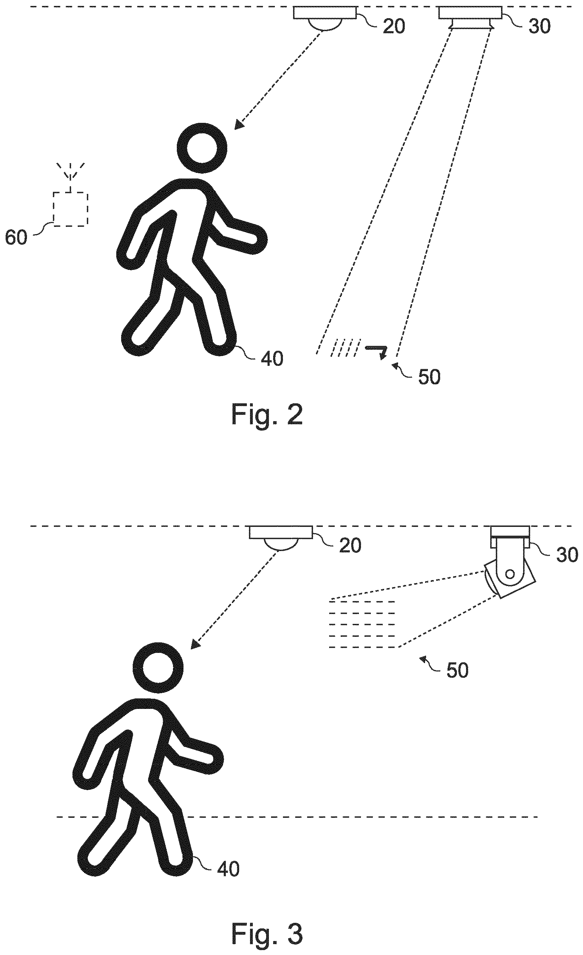

Fig. 1a shows a block diagram of an example of an apparatus 10 for controlling a projection system 30. The apparatus 10 comprises at least one interface 12 and one or more processors 14. Optionally, the apparatus 10 further comprises one or more storage devices 16. The one or more processors 14 are coupled with the one or more processors 12 and with the optional one or more storage devices 16. In general, the functionality of the apparatus 10 is provided by the one or more processors 14, e.g., in conjunction with the at least one interface (for communicating with one or more cameras 20, with the projection system 30 and/or with one or more further sensors 60 (as shown in Fig. 2)) and/or with the one or more storage devices 16 (for storing information).

The one or more processors 14 are configured to obtain, via the at least one interface 12, video data from the one or more cameras 20. The one or more processors 14 are configured to process the video data to determine a position of a person 40 (shown in Figs. 2 and 3) shown in the video data in an environment. The one or more processors 14 are configured to determine a projection target relative to the person based on the position of the person in the environment. The one or more processors 14 are configured to obtain additional information about the person. The one or more processors 14 are configured to control the projection system (via the at least one interface 12) to project a projection 50 (shown in Figs. 2 and 3) onto the projection target. The projection comprises information that depends on the additional information about the person and/or the position of the person.

Fig. 1a further shows a system comprising the one or more cameras 20, the projection system 30, and the apparatus 10. Optionally, as shown in Fig. 2, the system may further comprise one or more further sensors, such as RFID (Radio Frequency Identification) terminals or Bluetooth beacons, in addition to the one or more cameras 20.

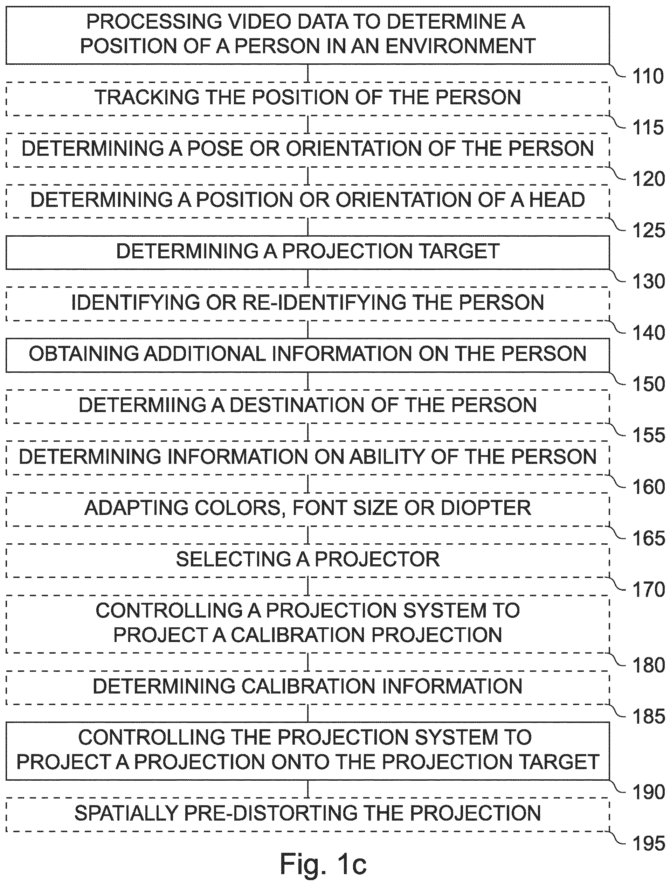

Figs. 1b and 1c show flow charts of examples of a corresponding method for controlling a projection system. The method comprises processing 110 the video data of the one or more cameras to determine the position of a person shown in the video data in the environment. The method comprises determining 130 the projection target relative to the person based on the position of the person in the environment. The method comprises obtaining 150 the additional information about the person. The method comprises controlling 190 the projection system to project the projection onto the projection target. The projection comprises the information that depends on the additional information about the person and/or the position of the person.

In the following, the features of the apparatus, of the system, of the method and of a corresponding computer program are illustrated with respect to the apparatus and system. Features introduced in connection with the apparatus and/or system may likewise be included in the corresponding method and computer program.

The proposed concept is based on three components - the one or more cameras 20, which are used to detect the person and determine the person's position, the projection system 30, which is used to provide the targeted projection, and the apparatus 10, which controls both the one or more cameras 20 and the projection system 30 and performs the processing of information in between the two.

The proposed concept starts with the video data of the one or more cameras. The one or more cameras are placed in the environment, e.g., as ceiling cameras or wall cameras. For example, the one or more cameras may be one or more surveillance cameras that are placed in the environment. In general, the one or more cameras may be placed such, that they can be used to detect the person in the environment, e.g., in the dark. For example, the one or more cameras may be suitable for providing video data of the person without ambient illumination. In particular, the one or more cameras may comprise one or more infrared cameras, i.e., cameras that comprise an emitter for emitting (near) infrared light and that are configured to record reflections of the emitted (near) infrared light. Accordingly, the video data may be video data of an infrared camera, i.e., video data representing reflections of (near) infrared light. However, the video data might not be limited to the infrared spectrum. For example, depending on the amount of ambient light available, the video data may comprise color video data or monochrome video data representing reflections of infrared light. Alternatively, the video data may be limited to color video data, e.g., if the one or more cameras lack an infrared emitter. For example, the one or more processors may be configured to obtain the video data by receiving the video data from the one or more cameras, by reading the video data from a memory of the one or more cameras, or by reading the video data from a shared memory after the video data has been written to the shared memory by the one or more cameras (or another entity). In general, the video data may be near real-time video data, e.g., with a delay between generation of the video data by the one or more cameras and the one or more processors obtaining the video data of at most one second.

The video data is processed by the apparatus 10, and the result of the processing is used to provide the projection via the projection system. For example, the one or more processors may be configured to generate and provide, via the at least one interface, a control signal to the projection system, to control the projection system. In general, the projection system 30 comprises one or more projectors. In particular, the projection system may be capable of projecting a projection onto a spatially variable projection target, with the projection having an information content. For the purpose of projecting the projection onto a spatially variable projection target, the one or more projectors may be coupled with servo motors that are configured to adjust a direction of the projection towards the projection target. In other words, the projection system may comprise one or more servo motors for adjusting a projection direction of the one or more projectors of the projection system (as shown by the arrows in Fig. 1a). Alternatively, the one or more projectors may be suitable for projecting a projection onto a first larger area using a plurality of pixels, and for projecting a projection onto a second smaller area using a subset of the plurality of pixels. The one or more processors may be configured to select the second smaller area within the first wider area, and to control the one or more projectors to provide the projection using the subset of pixels. The remainder of the pixels may be set to remain dark, e.g., by setting the pixels to a low brightness level or to off (if possible).

The projection system 30 is used provide a projection with an information content. Accordingly, the projection system may go beyond a light that is used to illuminate a portion of the environment. In some examples, the one or more projectors may be pixel-based and may be suitable for projecting arbitrary images (comprising the information content) onto the projection target. For example, a general purpose RGB (Red-Green-Blue) projector may be used. Alternatively, the one or more projectors may be configured to provide a uniform light beam (i.e., be a directed light source), with the projection system comprising one or more projection templates (e.g., one or more templates for projecting arrows for indication a direction) that are placed between the one or more projectors and the projection target.

Different types of projectors are suitable for providing the projection. For example, the projection system may comprise at least one laser projector, which may be used together with a projection template. Alternatively, or additionally, the projection system may comprise at least one light emitting diode (LED)-based projector, which may be a pixel-based projector or a projector for providing a uniform light beam. Alternatively, or additionally, the projection system may comprise at least one moving image projector, which may be a pixel-based projector. Any of the above projectors may be attached to, or hosted within, the ceiling of the environment, or be attached to a wall of the environment. Accordingly, the projection system may comprise at least one ceiling projector (i.e., a projector arranged at or within the ceiling) and/or at least one projector that is attached to a wall. In some examples, as will become evident in the following, the projection system may comprise a plurality of projectors, which are arranged at different places within the environment, so that the projection can be projected onto different projection targets throughout the environment. Similarly, a plurality of cameras may be arranged at different places within the environment. For example, the environment may be a large structure, such as a warehouse, an office building, an airport, a public transportation station or a cruise ship.

The apparatus 10 links the one or more cameras 20 and the projection system. It is used to process the video data provided by the one or more cameras, and to control the projection system accordingly. In particular, the one or more processors of the apparatus 10 process the video data to determine information about the person that is shown in the video data.

In a basic configuration, the one or more processors are configured to determine the position of the person in the environment. For example, the one or more processors may be configured to determine a position of the person within the field of view of the respective camera, and to determine the position of the person in the environment based on the position of the person in the field of view of the camera, e.g., by using a pre-defined translation rule between the position and/or size of the person in the field of view of the camera (i.e., in the video data) and the position of the person in the environment. For example, the body pose of the person may be determined, and the position of the feet of the person (according to the body pose) may be used to determine the position of the person in the environment. For example, the position of the person in the environment may be determined relative to a two-dimensional or three-dimensional coordinate system that spans the environment. Alternatively, the position of the person may be determined relative to another point of reference, such as relative to a projector of the projection system.

In general, the proposed concept may be used to provide information to persons moving around the environment. Accordingly, the position of the person might not only be determined once but may be updated and tracked as the person moves around the environment. For example, the one or more processors are configured to track the position of the person over a plurality of frames of the video data, and to update the projection target if the position of the person changes. Accordingly, as further shown in Fig. 1c, the method may comprise tracking 115 the position of the person over a plurality of frames of the video data and updating the projection target if the position of the person changes. In particular, the person may move freely around the environment. If the proposed concept is used with multiple cameras that are arranged at different positions within the environment, the person may be tracked as they move around the environment, via the cameras that are arranged at different places of the environment. In other words, the one or more processors may be configured to track the position of the person across video data of at least two cameras. Accordingly, the method may comprise tracking 115 the position of the person across video data of at least two cameras. For example, a spatial relationship between the cameras may be used to determine a correspondence between a person detected in video data of one camera and a person detected in video data of another camera. Additionally, or alternatively, person re-identification may be used to track the person across the video data of the at least two cameras. More details on person re-identification will be given at a later stage of the present disclosure.

In some configurations, additional properties of the person may be determined (in addition to the person's position). For example, the one or more processors may be configured to determine a pose of the person and/or an orientation of at least one body part of the person (e.g., of the head, of a hand, or of the torso of the person). Accordingly, as shown in Fig. 1c, the method may comprise determining 120 the pose of the person and/or the orientation of the at least one body part of the person. In particular, the one or more processors may be configured to determine a position and/or orientation of a head of the person. Accordingly, as further shown in Fig. 1c, the method may comprise determining 125 the position and/or orientation of the head of the person. For example, the position or orientation of the head or torso of the person may be determined to determine a suitable projection target, e.g., within the field of view of the person when the person is looking ahead (e.g., ahead towards the floor or ahead towards a wall). The position or orientation of the hand of the person, on the other hand, may be used to determine a projection target on the back or palm of the hand of the person. Alternatively, or additionally, the body pose or orientation of the body part (e.g., hand) of the person may be used to interact with the projection, e.g., by allowing the person to input information (e.g., perform a selection) with their hands (e.g., similar to interaction in a virtual reality environment, albeit without virtual reality goggles).

In general, the position of the person in the environment and/or the position and/or orientation of the body part, such as the head, torso, or hand, may be derived from the body pose of the person. Accordingly, the one or more processors may be configured to determine the body pose of the person based on the video data, and to derive the position and/or orientation of the body part from the pose of the person. For example, this analysis may be performed with the help of a machine-learning model (further denoted "pose-estimation machine-learning model") being trained to output information on the (estimated) pose of the person based. For example, the pose-estimation machine-learning model may be trained to perform pose-estimation on the video data. For example, the one or more processors may be configured to process, using the pose-estimation machine-learning model, the video data to determine the body pose of the person shown in the video data.

In this context, the body pose of the persons may be based on, or formed by, the relative positions and angles of the limbs of the one or more persons. For example, the person may be represented by a so-called body pose skeleton, which comprises a plurality of joints and a plurality of limbs. However, the terms "joints" and "limbs" of the body pose skeleton are used in an abstract sense and do not necessarily mean the same as the terms being used in medicine. The body pose skeleton may be a graph, with the joints being the vertices of the graphs and the limbs being the edges of the graph. In body pose skeleton, the joints are interconnected by the limbs. While some of the limbs being used to construct the body pose skeleton correspond to their biological counterparts, such as "upper arm", "lower arm", "thigh" (i.e., upper leg) and "shank" (i.e., lower leg), the body pose skeleton may comprise some limbs that are not considered limbs in a biological sense, such as a limb representing the spine, a limb connecting the shoulder joints, or a limb connecting the hip joints. In effect, the limbs connect the joints, similar to the edges of the graph that connect the vertices. For example, limbs may be rotated relative to each other at the joints connecting the respective limbs. For example, the pose-estimation machine-learning model may be trained to output a body pose skeleton (e.g., as a graph) based on the video data.

In some examples, the pose-estimation machine-learning model may be trained to output two-dimensional body pose data. In this case, the body pose of the person may comprise a body pose skeleton, where the joints of the skeleton are defined in two-dimensional space, e.g., in a coordinate system that corresponds to the coordinate system of frames of the video data. For example, the video data may be used as an input for the pose-estimation machine-learning model, and the two-dimensional body pose may be output by the pose-estimation machine-learning model. Various well-known machine-learning models may be used for the task, such as DeepPose or Deep High-Resolution Representation Learning for Human Pose Estimation (HRNet). Such two-dimensional body pose data may suffice for the following processing of the body pose.

In some examples, however, the body pose may be determined in three dimensions, i.e., the positions of the joints of the pose-estimation skeleton may be defined in a three-dimensional coordinate system. For example, the pose-estimation machine-learning model may be trained to perform three-dimensional pose-estimation. In some examples, the pose-estimation machine-learning model may be trained to perform three-dimensional pose-estimation based on video data from a plurality of cameras that show the one or more persons from a plurality of angles of observation. For example, the plurality of angles of observation may show the movement and pose(s) of the one or more persons in an environment, as recorded by the plurality of cameras being placed around the environment. Alternatively, the pose-estimation machine-learning model may be trained to perform three-dimensional pose-estimation based on video data from a single camera. In this case, the video data from the single camera may suffice to determine the three-dimensional body pose, e.g., when only video data from a single camera is available, or if the field of view of one or more additional cameras is obstructed.

Alternatively, the three-dimensional body pose may be generated based on the two-dimensional body pose. The one or more processors may be configured to post-process the two-dimensional body pose to generate the three-dimensional body pose, e.g., using a further machine-learning model, or using triangulation on multiple time-synchronized samples of the body pose that are based on different angles of observation.

It is evident that some aspects of the person, such as the position of the person, the body pose of the person and related properties (orientation or position of a body part), can be determined using machine learning. In other words, the one or more processors may be configured to use a machine-learning model, and in particular a machine-learning model being trained using deep learning, to determine the position of the person, the pose of the person and/or the orientation of the at least one body part of the person based on the video data. Accordingly, as further shown in Fig. 1c, the method may comprise using a machine-learning model, and in particular a machine-learning model being trained using deep learning, to determine 110; 115; 120; 125 the position of the person, the pose of the person and/or the orientation of the at least one body part of the person based on the video data.

The position of the person, and optionally other properties, such the pose or orientation of the at least one body part, are then used to determine the projection target. In the present embodiment, customized information is projected for the person. Therefore, the projection target may be chosen such, that the projection can be perceived by the person, and in particular such, that the projection can be perceived by the person if or when the person looks ahead. For this purpose, the position and the other properties of the person can be used.

For example, the body pose, e.g., the orientation of the head, may be used to determine the direction the person is facing. The protection target may then be chosen such, that the projection is visible (and discernible) to the person based on their current body pose, i.e., without the person having to turn to see the projection. In particular, the following three projection targets relative to the person have been identified as suitable for conveying information - the floor in front of the person, a wall in front of the person, or a body part of the person, such as the back or palm of the hand of the person. Accordingly, the one or more processors may be configured to place the projection target on one of the floor, a wall of the environment, and a pre-determined body part of the person. For example, the one or more processors may be configured to place the projection target on the floor, the wall in a direction that is aligned with the pose of the person, i.e., in front of the person.

Fig. 2 shows a schematic diagram of an example, where information on a direction is projected onto the floor in front of the person. For example, the present concept may be used for navigation or other purposes by directing a visitor, for example, by projecting appropriate arrow marks on the floor in front of the person. For example, using the two-dimensional position of the person, the apparatus may make the projector shine onto the floor in front of the person in order to reveal the desired information. Fig. 2 shows the person 40, which is shown in video data of a ceiling camera 20. A ceiling projector 30 is used to project a projection 50 onto the floor in front of the person. In Fig. 2, a direction arrow and some explanatory text is projected in front of the person. Optionally, additional information on the person, or the position of the person, can be further determined using a further sensor 60.

Different types of projectors may be used to project such a direction angle onto the floor. For example, a directable arrow can be projected onto the floor if a third servo motor (for the "roll angle") is used in combination with a projector that provides a uniform light beam and a projection mask, enabling the change in direction of the arrow. Alternatively, a general-purpose RGB projector may be used, such as shown in Fig. 2, so that additional information can be projected in addition to the arrow. For example, in addition to guiding the person to their destination, safety feedback can be given (e.g., "WARNING: Be careful before proceeding" with corresponding animations etc.).

Such information can also be projected onto the wall. Fig. 3 shows a schematic diagram of an example, where contextual information is projected onto the wall near the person. Again, the person 40 is shown in video data of ceiling camera 20, and a projector 30 that uses servo motors to change the projection direction is used to project the projection 50 onto the projection target at the wall. In this case, the projection comprising textual information is projected onto the wall near the person, at head's height.

To determine the information content of the projection, the additional information about the person is used. In various examples, this additional information is determined based on an identity or re-identification of the person. In other words, the detected person may be further analyzed to reveal their identity or reveal previous whereabouts of the person in the environment. For example, the one or more processors may be configured to identify or re-identify the person based on the video data. Accordingly, as further shown in Fig. 1c, the method may comprise identifying or re-identifying 140 the person based on the video data. The projection, e.g., the information content of the projection, or the decision on whether the projection is to be provided, may be based on the identity or re-identification of the person. In other words, the one or more processors may be configured to determine the additional information based on the identity or the re-identification of the person. Additionally, or alternatively, the one or more processors may be configured to control the projection system to project the projection based on whether the identity or re-identification of the person satisfies a pre-defined criterion.

There are various concepts that enable an identification or re-identification of the one or more persons. The identification or re-identification of the person can use image-based techniques such as facial recognition or re-id, QR (Quick Response) codes (worn by the person) or similar. For example, the one or more processors may be configured to identify the one or more persons using facial recognition on the video data. For example, a machine-learning model (further denoted "facial recognition machine-learning model") may be trained to perform various aspects of the facial recognition. For example, the facial recognition machine-learning model may be trained to perform face detection on the video data, and to extract features of the detected face. The one or more processors may be configured to compare the extracted features of the detected face with features that are stored in a face-recognition database. For example, the features of a person that is expected to be in the environment (e.g., an employee, security personnel etc.) may be stored within the face-recognition database. Optionally, the features of a person that is explicitly not allowed in the environment may also be stored within the face-recognition database. If a person is found in the face-recognition database, and the person is expected to be in the environment, the projection may be tailored to the person, or the projection may be omitted as it is not required (as the employee or security person knows their way around the environment). If a person is not found in the face-recognition database, the projection may be provided without personalized information, and the direction to the nearest security post or information desk may be shown. In these case, the pre-defined criterion may relate to whether the person is found in the face-recognition dataset. For example, with respect to the former example, the pre-defined criterion may be considered to be fulfilled if the person is found in the face-recognition database and expected to be in the environment, and thus the projection might not be shown, and not fulfilled if the person is not found, and thus the projection might be shown. With respect to the latter example, the pre-defined criterion may be considered to be fulfilled if the person is not found in the face-recognition database, with the projection being shown without customized information, or the pre-defined criterion may be considered to be fulfilled if the person is found in the face-recognition database, with the projection being shown with customized information. In this case, both cases may be used as pre-defined condition, with the information content of the projection changing based on the pre-defined criterion.

For example, if the person's identity is known (by using facial recognition with the same camera and video feed or other sources of information), then the projected image can be further customized to contain personal feedback. For example, feedback can be given by using a general-purpose projector to project personalized information onto the floor or wall by first using the camera feed to identify the person.

Alternatively (or additionally), person re-identification may be used. In other words, the one or more processors may be configured to re-identify the person using a machine-learning model that is trained for person re-identification (further denoted "person re-identification machine-learning model"). Visual person re-identification systems serve the purpose of distinguishing or re-identifying people, from their appearance alone, in contrast to identification systems that seek to establish the absolute identity of a person (usually from facial features). In this context, the term person re-identification indicates, that a person is re-identified, i.e., that a person that has been recorded earlier, is recorded again, and matched to the previous recording.

In various examples, the re-identification is based on so-called re-identification codes that are generated from visual data, such as video data. A re-identification code of a person represents the person and should be similar for different images of a person. A person's re-identification code may be compared with other re-identification codes of persons. If a match is found between a first and a second re-identification code (i.e., if a difference between the re-identification codes is smaller than a threshold), the first and second re-identification codes may be deemed to represent the same person. To perform the re-identification, two components are used - a component for generating re-identification codes, and a component for evaluating these re-identification codes, to perform the actual re-identification. In some examples, the facial recognition mentioned above may be implemented using person re-identification. For example, the feature extraction may be performed by generating a re-identification code, which can be compared to other re-identification codes that are stored in the facial recognition database.

A person may be added to the re-identification system by generating a re-identification code based on an image of the person and storing the generated code on the one or more storage devices. The re-identification code may be generated so that it allows to re-identify a person, i.e., allows to determine if the person has been captured in a frame of the video data. The re-identification code may allow for a so called anonymous re-identification, where the re-identification code is generated without establishing the absolute identity of a person. Accordingly, in some examples, where anonymous re-identification is desired, the re-identification code representing a person might not be linked to the identity of the person. Such anonymous re-identification suffices to track a person as the person moves throughout the environment, without linking their movement to an identity. The person re-identification machine-learning model may be trained to output, for the person shown in the video data, a corresponding re-identification code. The one or more processors may be configured to generate the re-identification code of the person shown in the video data using the re-identification machine-learning model, and to compare the stored re-identification code or codes with the re-identification code of the person. If a match is found, the person shown in the video data may be re-identified. Depending on whether the person is expected to be in the environment or based on whether the person is actively being guided through the environment, the projection may be provided. If a person shown in the video data cannot be re-identified, no projection might be provided, or a prompt may be shown offering to guide the person to a destination. In the former case, the pre-defined criterion relates to whether the person can be re-identified. If the predefined criterion is not met, i.e., if the person cannot be re-identified, the projection might not be provided.

As outlined above, in some applications of the proposed concept, the information content of the projection may be used to guide the person around the environment. In this application, the identity or re-identification of the person may be used to determine the destination and then guide the person to their destination. In other words, the one or more processors may be configured to determine a destination of the person for the additional information about the person based on the identity or re-identification of the person, and to generate the projection with a directional pointer pointing towards the destination of the person. Accordingly, as shown in Fig. 1c, the method may comprise determining 155 the destination of the person for the additional information about the person based on the identity or re-identification of the person and generating the projection with a directional pointer pointing towards the destination of the person. For example, the destination of the person may be obtained from a database based on the identity of the person. For example, in an airport, the identity of the person may be used to determine a departure gate, with the departure gate being the destination. In a re-identification scenario, the person may have selected a destination at a terminal, with a camera of the terminal being used to generate the initial re-identification code, and this destination may be obtained from a database whenever the person is re-identified in video data from another camera. For example, the directional pointer (e.g., an arrow and/or a written description) may be projected onto the floor, onto the wall, or onto an outstretched hand of the person.

In some examples, the identity of re-identification of the person may be used with respect to accessibility. For example, some people may be known to have difficulty discerning information due to their visual acuity (e.g., with respect to font sizes, colors that can be distinguished, diopter etc.). Such information may be stored in a database and may be accessible via their identity or re-identification code. For example, the one or more processors may be configured to determine information on an ability of the person to perceive visual information for the additional information about the person based on the identity or re-identification of the person. The one or more processors may be configured to determine a visual presentation of the information content of the projection based on the information on the ability of the person to perceive visual information. Accordingly, as shown in Fig. 1c, the method may comprise determining 160 information on the ability of the person to perceive visual information for the additional information about the person based on the identity or re-identification of the person. The method may comprise determining the visual presentation of the information content of the projection based on the information on the ability of the person to perceive visual information. In particular, the one or more processors may be configured to adapt at least one of colors being used, a font size, and a diopter compensation of the projection. Accordingly, as shown in Fig. 1c, the method may comprise adapting 165 at least one of colors being used, a font size, and a diopter compensation of the projection. For example, the color, the font size and/or the diopter compensation may be adapted to the ability of the person to perceive visual information. Additionally, or alternatively, the language and/or type of character (e.g., Latin, Cyrillic, Georgian, traditional Chinese, simplified Chinese, Korean, Kanji, Katakana, Hiragana etc.) may be adapted to the preference of the person.

As outlined throughout the disclosure, the proposed concept may be applicable to large environments, such as airports, warehouses, cruise ships etc., that span large spaces that cannot be serviced with a single camera or a single projector. Accordingly, cameras and projectors may be placed throughout the environment, in order to provide the information wherever it is needed. As a result, the projection may be provided by a projector of the projection system that covers the projection target (without the projection colliding with the person). For example, the one or more processors may be configured to select one of a plurality of projectors of the projection system based on the position, based on a pose of the person, and/or based on an orientation of at least one body part of the person, and to control the projection system to project the projection using the selected projector. Accordingly, as shown in Fig. 1c, the method may comprise selecting 170 one of the plurality of projectors of the projection system based on the position, based on a pose of the person, and/or based on an orientation of at least one body part of the person, and to control the projection system to project the projection using the selected projector. For example, the projector may be selected based on whether the projector is suitable for projecting the projection onto the projection target without the projection colliding with the person (i.e., such that the person does not stand in the way of the projection).

In general, environments such as warehouses, airports etc., have many surfaces that can be used as projection target. However, not all of these projection targets are even surfaces. Moreover, the surfaces are often at an angle relative to the projection beam. For example, if a projector is used with servos to direct the projection beam, highly acute angles between the projection surface and the projector can be the result. To compensate, an automated calibration approach may be used. For example, the one or more processors may be configured to control the projection system to project a calibration projection (e.g., a pre-defined pattern), to determine calibration information based on video data showing the calibration projection (e.g., a difference between the pre-defined pattern and the projection on the projection surface), and to control the projection system based on the calibration information (e.g., by pre-distorting the projection to perform keystone correction and/or to account for uneven surfaces). Accordingly, as shown in Fig. 1c, the method may comprise controlling 180 the projection system to project a calibration projection, to determine calibration information 185 based on video data showing the calibration projection, and to control the projection system based on the calibration information. For example, with respect to the calibration of a projector that is used with servos to change the direction of the projection beam, the control of the light can be automatically calibrated by moving the servos around in a grid and tracking the corresponding position of the light (center) in the two-dimensional image in the video data.

The one or more processors are then configured to control the projection system to project the projection 50 onto the projection target. The projection comprises the information that depends on the additional information about the person and/or the position of the person. In particular, as outlined in examples, the information that depends on the additional information about the person and/or the position of the person may comprise one or more of a directional indicator (e.g., an arrow) for showing the way to a destination of the person, a warning that is based on the destination of the person, a textual description of the route to the destination, and contextual information (e.g., about machines in an industrial plant, about artworks in a museum, about facilities in an airport or cruise ship and the like). The one or more processors may be configured to determine this information based on the additional information on the person (e.g., based on their identity or based on whether the person knows their way around the environment) and/or based on the position (e.g., the directional indicator or the textual description of the route).

As discussed with respect to the calibration, in many cases, environments such as warehouses, airports etc., have many surfaces that can be used as projection target, which might not be even, or which may be at an angle relative to the projection beam. The one or more processors may be configured to compensate, by spatially pre-distorting the projection. Moreover, visual effects may be employed, such that the projection appears to float in the air in front of the person. For example, the projection may be pre-distorted using an appropriate perspective matrix such that the projected image is transformed in a way which makes the person perceive the information as if it appeared on a virtual screen floating in front of the person, or even to render a 3D object for, e.g., advertisement purposes using a false perspective. The techniques and effects may be similar to the techniques and effects used by advertisements on sports fields or forced perspective illustrations. However, the effect may be made interactive. To do this, a projection matrix is determined such that the transformed image projected onto the floor or wall by the projector will appear by the person to represent a 3D object. The projection of the object may then change accordingly when the person moves around but appear from his view to be a 3D object. For example, an image of a 3D object may be projected onto the floor using forced perspective to appear to the person as if it was a real, physical 3D object as seen from his current angle. For example, the one or more processors may be configured to spatially pre-distort the projection based on the position and/or orientation of the head of the person, such that an information content of the projection is discernible by the person. Accordingly, as shown in Fig. 1c, the method may comprise spatially pre-distorting 195 the projection based on the position and/or orientation of the head of the person, such that an information content of the projection is discernible by the person. For example, the one or more processors may be configured to determine the perspective/projection matrix based on the position and/or orientation of the head of the person. The one or more processors may be configured to update the perspective/projection matrix as the person moves around.

In the following, an example is given for a spatial transformation process, which can be used to spatially pre-distort the projection. In the following, a 4x4 matrix is used as an example. A projection matrix for a given field of view (fov), near plane ($z_n$), and far plane ($z_f$), can be constructed as follows:

$$\begin{pmatrix} \cot\left(\dfrac{\text{fov}_w}{2}\right) & 0 & 0 & 0 \\ 0 & \cot\left(\dfrac{\text{fov}_h}{2}\right) & 0 & 0 \\ 0 & 0 & \dfrac{z_f}{z_f - z_n} & 1 \\ 0 & 0 & \dfrac{z_f z_n}{z_n - z_f} & 0 \end{pmatrix}$$

where $\text{fov}_w$ is the field of view in width of screen angles (radians), $\text{fov}_h$ is the field of view in width of screen angles and $cot$ is the cotangent function. The projection matrix can then be further manipulated to match external parameters for the specific camera or projector, such as position and orientation, by multiplying it with corresponding rotation and translation matrices.

In the proposed concept, these position and orientation matrices may match the position and orientation of the person (e.g., of the head of the person). These can be derived as shown above, e.g., using a pose-estimation machine-learning model, based on the video data from the camera or cameras placed in the environment. For example, the position and/or orientation of the eyes may be determined and used as a reference for the determination of the position and orientation matrices.

The above-referenced "holographic" reprojection method, which may be used to generate the projection such that the projection appears to float in the air in front of the person, is described in the following. For example, such a holographic reprojection may be implemented similar to a method used in computer graphics to reproject an object's shadow onto a surface. In the following, it is assumed that a 3D object, which may represent the information to be shown using the projection, is described in (local) object coordinates by a triangle mesh or similar. Furthermore, the 3D object is assumed to be positioned in 3D world space corresponding to a model matrix, $M_{model}$. It is further assumed that an onlooker has a given eye position, orientation and field of view corresponding to a projection matrix, $M_{view}$. In addition, it is assumed that the floor surface is described by an infinite plane and a corresponding "shadow matrix", $M_{surface}$. Finally, it is assumed that an RGB projector (or similar projection device) is positioned in world space according to a view matrix, $M_{proj}$.

For example, the following process may be used for the re-projection. First the object mesh may be transformed to world coordinates by the use of the model matrix, $M_{model}$. Then the object may be rendered in eye space of the onlooker using $M_{view}$ using its world coordinate description. The object may then be backprojected onto the floor using the shadow projection matrix / surface reprojection matrix, $M_{surface}$, so that the projection is provided according to the eye position of the person. For an infinite floor, this backprojection is performed only once. For a more elaborate floor description comprising multiple triangles, the backprojection may be repeated. Finally, the object may be backprojected onto the RGB projector's backplane $M_{proj}$ to obtain the resulting image to be send to the RGB projector. The above process allows the projector to use the final image, obtaining a projection of the 3D object (of the information to be projected) that will seem as a "hologram" for the person from their given position.

As an improvement, the tasks above might not actually be carried out as described. Instead, the projection matrices may be manipulated to yield the final projection matrix by multiplying the four matrices $M_{proj}$, $M_{view}$, $M_{surface}$ and $M_{model}$ to obtain a single projection matrix $M$. This rendering process may directly render the final image to be used by the RGB projector, bypassing intermediate calculations by transforming the object mesh with a single matrix computation / projection task.

In both cases, the end result is a reprojected image of the 3D object which will appear as a hologram for the person. One or more shadows may be added to further enhance realism.

In some examples, the information being projected being projected may be interactive, i.e., the person may interact with the information being projected. For example, the one or more processors may be configured to determine an interaction (e.g., gestures) of the person with the projection based on the pose of the person and/or based on the orientation of the at least one body part (e.g., based on the orientation of the hands). For example, the one or more processors may be configured to determine the interaction of the person with the projection based on a progress of the pose or orientation over multiple frames of video data, in order to determine gestures that are based on a movement, e.g., a swiping motion. The one or more processors may be configured to control the projection based on the interaction, e.g., by scaling the projection or by moving the projection target, or by adjusting the information content of the projection, e.g., by scrolling through the information content or switching to a previous or subsequent information content. In effect, the pose may be used to interact with the projection, similar to the hand-based input being used in virtual reality (albeit without virtual reality goggles).

In some examples, in addition to the analysis of the video data, additional sensors may be used to determine the properties of the person and/or the additional information about the person. For example, the one more processors may be configured to determine the position of the person and/or the additional information about the person further based on sensor data of one or more further sensors (e.g., the sensor 160 shown in Fig. 2). For example, the pose, eye direction or clothing may be determined based on the sensor data of the one or more further sensors. For example, the one or more further sensors may include sensors such as Bluetooth beacons (for picking up Bluetooth (advertising) packets of a mobile device of the person, e.g., to determine the identity of the person or for re-identification of the person), radio frequency identification (RDIF) or near field communication (NFC) terminals (for registering an identification card of the person, to determine the identity of the person), separate infrared-based cameras, depth sensors (e.g., Time-of-Flight sensors, Lidar sensors or Radar sensors), microphones etc.

At least some examples of the present disclosure are based on using a machine-learning model or machine-learning algorithm. Machine learning refers to algorithms and statistical models that computer systems may use to perform a specific task without using explicit instructions, instead relying on models and inference. For example, in machine-learning, instead of a rulebased transformation of data, a transformation of data may be used, that is inferred from an analysis of historical and/or training data. For example, the content of images may be analyzed using a machine-learning model or using a machine-learning algorithm. In order for the machine-learning model to analyze the content of an image, the machine-learning model may be trained using training images as input and training content information as output. By training the machine-learning model with a large number of training images and associated training content information, the machine-learning model "learns" to recognize the content of the images, so the content of images that are not included of the training images can be recognized using the machine-learning model. The same principle may be used for other kinds of sensor data as well: By training a machine-learning model using training sensor data and a desired output, the machine-learning model "learns" a transformation between the sensor data and the output, which can be used to provide an output based on non-training sensor data provided to the machine-learning model.

Machine-learning models are trained using training input data. The examples specified above use a training method called "supervised learning". In supervised learning, the machine-learning model is trained using a plurality of training samples, wherein each sample may comprise a plurality of input data values, and a plurality of desired output values, i.e., each training sample is associated with a desired output value. By specifying both training samples and desired output values, the machine-learning model "learns" which output value to provide based on an input sample that is similar to the samples provided during the training. Apart from supervised learning, semi-supervised learning may be used. In semi-supervised learning, some of the training samples lack a corresponding desired output value. Supervised learning may be based on a supervised learning algorithm, e.g., a classification algorithm, a regression algorithm, or a similarity learning algorithm. Classification algorithms may be used when the outputs are restricted to a limited set of values, i.e., the input is classified to one of the limited set of values. Regression algorithms may be used when the outputs may have any numerical value (within a range). Similarity learning algorithms are similar to both classification and regression algorithms but are based on learning from examples using a similarity function that measures how similar or related two objects are.

Apart from supervised or semi-supervised learning, unsupervised learning may be used to train the machine-learning model. In unsupervised learning, (only) input data might be supplied, and an unsupervised learning algorithm may be used to find structure in the input data, e.g., by grouping or clustering the input data, finding commonalities in the data. Clustering is the assignment of input data comprising a plurality of input values into subsets (clusters) so that input values within the same cluster are similar according to one or more (predefined) similarity criteria, while being dissimilar to input values that are included in other clusters.

Reinforcement learning is a third group of machine-learning algorithms. In other words, reinforcement learning may be used to train the machine-learning model. In reinforcement learning, one or more software actors (called "software agents") are trained to take actions in an environment. Based on the taken actions, a reward is calculated. Reinforcement learning is based on training the one or more software agents to choose the actions such, that the cumulative reward is increased, leading to software agents that become better at the task they are given (as evidenced by increasing rewards).

In various examples introduced above, various machine-learning models are being used, e.g., a pose-estimation machine-learning model, a facial recognition machine-learning model, or a person re-identification machine-learning model. For example, these machine-learning models may be trained using various techniques, as shown in the following.

For example, the pose-estimation machine-learning model may be trained using supervised learning. For example, video data may be used as training samples of the training, and corresponding pose-estimation data, e.g., the points of the body pose skeleton in a two-dimensional or three-dimensional coordinate system, may be used as desired output. Alternatively, reinforcement learning may be used, with a reward function that seeks to minimize the deviation of the generated pose-estimation data from the actual poses shown in the video data being used for training.

The machine-learning model or models being used for facial recognition may also be trained using supervised learning, e.g., by training the machine-learning model to detect faces within the video data and to output corresponding positions to be used for a rectangular bounding box, with frames of the video data being provided as training samples and the corresponding positions of the bounding boxes being provided as desired training output. Feature extraction is a classification problem, so a classification algorithm may be applied. Alternatively, as outlined above, the facial recognition can be implemented using a person re-identification machine-learning model.

The person re-identification machine-learning model may be trained using a triplet-loss based training, for example. In triplet loss, a baseline input is compared to a positive input and a negative input. For each set of inputs being used for training the person re-identification machine-learning model, two samples showing the same person may be used as baseline input and positive input, and a sample from a different person may be used as negative input of the triplet loss-based training. However, the training of the person re-identification machine-learning model may alternatively be based on other supervised learning-, unsupervised learning- or reinforcement learning algorithms. For example, Ye et al: "Deep Learning for Person Re-identification: A Survey and Outlook" (2020) provides examples for machine learningbased re-identification systems, with corresponding training methodologies.

Machine-learning algorithms are usually based on a machine-learning model. In other words, the term "machine-learning algorithm" may denote a set of instructions that may be used to create, train, or use a machine-learning model. The term "machine-learning model" may denote a data structure and/or set of rules that represents the learned knowledge, e.g., based on the training performed by the machine-learning algorithm. In embodiments, the usage of a machine-learning algorithm may imply the usage of an underlying machine-learning model (or of a plurality of underlying machine-learning models). The usage of a machine-learning model may imply that the machine-learning model and/or the data structure/set of rules that is the machine-learning model is trained by a machine-learning algorithm.

For example, the machine-learning model may be an artificial neural network (ANN). ANNs are systems that are inspired by biological neural networks, such as can be found in a brain. ANNs comprise a plurality of interconnected nodes and a plurality of connections, so-called edges, between the nodes. There are usually three types of nodes, input nodes that receiving input values, hidden nodes that are (only) connected to other nodes, and output nodes that provide output values. Each node may represent an artificial neuron. Each edge may transmit information, from one node to another. The output of a node may be defined as a (non-linear) function of the sum of its inputs. The inputs of a node may be used in the function based on a "weight" of the edge or of the node that provides the input. The weight of nodes and/or of edges may be adjusted in the learning process. In other words, the training of an artificial neural network may comprise adjusting the weights of the nodes and/or edges of the artificial neural network, i.e., to achieve a desired output for a given input. In at least some embodiments, the machine-learning model may be deep neural network, e.g., a neural network comprising one or more layers of hidden nodes (i.e., hidden layers), prefer-ably a plurality of layers of hidden nodes.

Alternatively, the machine-learning model may be a support vector machine. Support vector machines (i.e., support vector networks) are supervised learning models with associated learning algorithms that may be used to analyze data, e.g., in classification or regression analysis. Support vector machines may be trained by providing an input with a plurality of training input values that belong to one of two categories. The support vector machine may be trained to assign a new input value to one of the two categories. Alternatively, the machine-learning model may be a Bayesian network, which is a probabilistic directed acyclic graphical model. A Bayesian network may represent a set of random variables and their conditional dependencies using a directed acyclic graph. Alternatively, the machine-learning model may be based on a genetic algorithm, which is a search algorithm and heuristic technique that mimics the process of natural selection.

The at least one interface 12 may correspond to one or more inputs and/or outputs for receiving and/or transmitting information, which may be in digital (bit) values according to a specified code, within a module, between modules or between modules of different entities. For example, the at least one interface 12 may comprise interface circuitry configured to receive and/or transmit information.

In embodiments the one or more processors 14 may be implemented using one or more processing units, one or more processing devices, any means for processing, such as a processor, a computer or a programmable hardware component being operable with accordingly adapted software. In other words, the described function of the one or more processors 14 may as well be implemented in software, which is then executed on one or more programmable hardware components. Such hardware components may comprise a general-purpose processor, a Digital Signal Processor (DSP), a microcontroller, etc.

In at least some embodiments, the one or more storage devices 16 may comprise at least one element of the group of a computer readable storage medium, such as a magnetic or optical storage medium, e.g., a hard disk drive, a flash memory, Floppy-Disk, Random Access Memory (RAM), Programmable Read Only Memory (PROM), Erasable Programmable Read Only Memory (EPROM), an Electronically Erasable Programmable Read Only Memory (EEPROM), or a network storage.

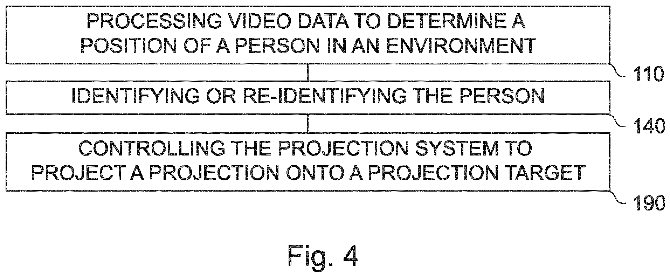

More details and aspects of the apparatus, system, method, and computer program are mentioned in connection with the proposed concept, or one or more examples described above or below (e.g., Fig. 4). The apparatus, system, method, and computer program may comprise one or more additional optional features corresponding to one or more aspects of the proposed concept, or one or more examples described above or below.

With respect to Figs. 1a to 3, examples were shown that relate to the provision of information to a person in an environment. However, at least some of the proposed techniques may also be applied to security applications. In particular, the proposed concept may be used to provide a projection that is provided based on whether the identity or re-identification of a person satisfies a pre-defined criterion, e.g., based on whether the person being identified or re-identified is allowed to be in the environment.

In the following, an apparatus, method, computer program and system is introduced, which may be implemented similar to the apparatus, method, computer program and system shown in connection with Figs. 1a to 3. Accordingly, the introduction of the apparatus and system refer back to Figs. 1a, 2 and 3, as the components of the proposed apparatus and system are similar to the components of the apparatus and system shown in Figs. 1a, 2 and 3.

Some examples of the present disclosure relate to another apparatus 10 for controlling a projection system 30. The apparatus comprises at least one interface 12 for obtaining video data from one or more cameras 20 and for communicating with the projection system 30. The apparatus 10 comprises one or more processors 14 configured to process the video data to determine a position of a person 40 shown in the video data in an environment. The one or more processors 14 are configured to identify or re-identify the person based on the video data. The one or more processors 14 control the projection system to project a projection 50 onto a projection target if the identity or re-identification of the person satisfies a pre-defined criterion, with the projection target being based on the position of the person in the environment and being defined relative to the person. Some examples relate to a corresponding system comprising the apparatus 10, the one or more cameras 20, the projection system 30, and optional further components, such as one or more further sensors 60.

Fig. 4 shows a flow chart of an example of a corresponding method for controlling the projection system. The method comprises processing 110 the video data of the one or more cameras to determine the position of a person shown in the video data in the environment. The method comprises identifying 140 or re-identifying the person based on the video data. The method comprises controlling 190 the projection system to project the projection onto the projection target if the identity or re-identification of the person satisfies the pre-defined criterion, the projection target being based on the position of the person in the environment and being defined relative to the person. The method may comprise one or more additional features, e.g., as shown in connection with Fig. 1c.

The respective features of the apparatus, of the system, of the method, and of a corresponding computer program have been introduced in connection with Figs. 1a to 3. However, the apparatus, system, method, and computer program discussed with respect to this second aspect of the present disclosure does not necessarily implement all of the features shown in connection with Figs. 1a to 3. The second aspect relates to the application of a capable video processing system, similar to the one shown in Figs. 1a to 3, to an application in the field of security. For example, it may be used to provide a concept for physical intruder detection and deterrence.

For example, the second aspect of the proposed concept may be implemented using a video camera, a light beam, and a number of servos. The camera may be used to identify or re-identify potential intruders (i.e., persons) in its video feed (through the use of machine-learning/artificial intelligence based on deep neural networks). In other words, the video feed may be analyzed, e.g., using a deep network, in order to detect persons. If an intruder is detected, then the device's built-in light beam (projector of the projection system) is switched on. The (two-dimensional) position of the person in the video data may be translated into a corresponding position of the servos. Using the servos, the light may be directed to shine onto the persons face. In particular, two electromechanical servos may direct the light beam towards the face or other body parts of the intruder and keep shining the light on their face until they leave the area. This lets the intruder know that they are being actively tracked hopefully deterring them for progressing further. In contrast to existing infrared-based approaches with passive/non-moving floodlights, the proposed additional movement of the light beam makes the active tracking more apparent for the intruder, thus increasing the factor of deterrence. Other body parts than the face can be targeted as well. For example, the projection target may be determined based on the body pose of the person, e.g., to target the projection onto a specific body part, such as the head or torso.

In the proposed concept, the person is identified or re-identified. This serves the purpose of distinguishing between persons that are allowed to be in the environment, e.g., a warehouse, or a restricted area of an airport, and other person that are not allowed to be in the environment. Thus, the security beam (that shines light in the face) may be deactivated for authorized personnel, e.g., by identifying or re-identifying known persons (i.e., authorized personnel) using facial recognition or person re-identification. For example, the pre-defined criterion may relate to whether the person is known (e.g., found in the face-recognition database or has a re-identification code that is similar to a known re-identification code) and/or relate to whether the person is known to be authorized to be in the environment (by linking the entry in the face-recognition database or the known re-identification codes with information indicating whether the person is authorized to be in the environment).

In a basic configuration, the light source and the camera may be placed in the same physical location or enclosure. However, similar to the examples shown in connection with Figs. 1a to 3, multiple cameras and projection systems may be placed around the environment. Thus, the camera and projection system can also be separated from each other. For example, a number of cameras and a different number of light sources may be combined in order to track multiple people in a wider area.

Similar to the examples shown above, automatic calibration may also be used for the direction of a searchlight towards the person. This can be done by placing the system in front of, e.g., a white wall, or more involved by detecting the position of a face in the image and appropriately adjusting the corresponding control of the servos until it can be detected that the face (or other body part) is covered with light. When the calibration process ends, the settings are then stored for the particular device for subsequent use.

More details and aspects of the apparatus, system, method, and computer program are mentioned in connection with the proposed concept, or one or more examples described above or below (e.g., Fig. 1a to 3). The apparatus, system, method, and computer program may comprise one or more additional optional features corresponding to one or more aspects of the proposed concept, or one or more examples described above or below.

The examples of the proposed concept may be applied in the fields of security, smart buildings, video surveillance, artificial intelligence, deep neural networks and/or computer vision.

The aspects and features described in relation to a particular one of the previous examples may also be combined with one or more of the further examples to replace an identical or similar feature of that further example or to additionally introduce the features into the further example.

Examples may further be or relate to a (computer) program including a program code to execute one or more of the above methods when the program is executed on a computer, processor, or other programmable hardware component. Thus, steps, operations, or processes of different ones of the methods described above may also be executed by programmed computers, processors, or other programmable hardware components.

Examples may also cover program storage devices, such as digital data storage media, which are machine-, processor- or computer-readable and encode and/or contain machine-executable, processor-executable or computer-executable programs and instructions. Program storage devices may include or be digital storage devices, magnetic storage media such as magnetic disks and magnetic tapes, hard disk drives, or optically readable digital data storage media, for example. Other examples may also include computers, processors, control units, (field) programmable logic arrays ((F)PLAs), (field) programmable gate arrays ((F)PGAs), graphics processor units (GPU), application-specific integrated circuits (ASICs), integrated circuits (ICs) or system-on-a-chip (SoCs) systems programmed to execute the steps of the methods described above.

It is further understood that the disclosure of several steps, processes, operations, or functions disclosed in the description or claims shall not be construed to imply that these operations are necessarily dependent on the order described, unless explicitly stated in the individual case or necessary for technical reasons. Therefore, the previous description does not limit the execution of several steps or functions to a certain order. Furthermore, in further examples, a single step, function, process, or operation may include and/or be broken up into several sub-steps, -functions, -processes or -operations.

If some aspects have been described in relation to a device or system, these aspects should also be understood as a description of the corresponding method. For example, a block, device or functional aspect of the device or system may correspond to a feature, such as a method step, of the corresponding method. Accordingly, aspects described in relation to a method shall also be understood as a description of a corresponding block, a corresponding element, a property or a functional feature of a corresponding device or a corresponding system.

The following claims are hereby incorporated in the detailed description, wherein each claim may stand on its own as a separate example. It should also be noted that although in the claims a dependent claim refers to a particular combination with one or more other claims, other examples may also include a combination of the dependent claim with the subject matter of any other dependent or independent claim. Such combinations are hereby explicitly proposed, unless it is stated in the individual case that a particular combination is not intended. Furthermore, features of a claim should also be included for any other independent claim, even if that claim is not directly defined as dependent on that other independent claim.

## Claims

1. An apparatus (10) for controlling a projection system (30), the apparatus comprising:

at least one interface (12) for obtaining video data from one or more cameras (20) and for communicating with the projection system; and one or more processors (14) configured to:

process the video data to determine a position of a person (40) shown in the video data in an environment,
determine a projection target relative to the person based on the position of the person in the environment,
obtain additional information about the person, and
control the projection system to project a projection (50) onto the projection target, the projection comprising information that depends on the additional information about the person and/or the position of the person.

2. The apparatus according to claim 1, wherein the one or more processors are configured to determine a pose of the person and/or an orientation of at least one body part of the person, and to determine the projection target relative to the person and/or the information being projected based on the pose of the person and/or based on the orientation of the at least one body part.

3. The apparatus according to claim 2, wherein the one or more processors are configured to determine the projection target such, that the projection can be perceived by the person if the person looks ahead, and/or wherein the one or more processors are configured to determine a position and/or orientation of a head of the person and to spatially pre-distort the projection based on the position and/or orientation of the head of the person, such that an information content of the projection is discernible by the person.

4. The apparatus according to one of the claims 1 to 3, wherein the one or more processors are configured to select one of a plurality of projectors of the projection system based on the position, based on a pose of the person, and/or based on an orientation of at least one body part of the person, and to control the projection system to project the projection using the selected projector.

5. The apparatus according to one of the claims 1 to 4, wherein the one or more processors are configured to place the projection target on one of the floor, a wall of the environment, and a pre-determined body part of the person.

6. The apparatus according to one of the claims 1 to 5, wherein the one or more processors are configured to track the position of the person over a plurality of frames of the video data, and to update the projection target if the position of the person changes.

7. The apparatus according to one of the claims 1 to 6, wherein the one or more processors are configured to use a machine-learning model being trained using deep learning to determine the position of the person, a pose of the person and/or an orientation of at least one body part of the person based on the video data.

8. The apparatus according to one of the claims 1 to 7, wherein the one or more processors are configured to identify or re-identify the person based on the video data, wherein the projection is based on the identity or re-identification of the person.

9. The apparatus according to claim 8, wherein the one or more processors are configured to determine the additional information based on the identity or the re-identification of the person,

and/or wherein the one or more processors are configured to determine a destination of the person for the additional information about the person based on the identity or re-identification of the person, and to generate the projection with a directional pointer pointing towards the destination of the person,
and/or wherein the one or more processors are configured to determine information on an ability of the person to perceive visual information for the additional information about the person based on the identity or re-identification of the person, and to determine a visual presentation of an information content of the projection based on the information on the ability of the person to perceive visual information.

10. The apparatus according to one of the claims 8 or 9, wherein the one or more processors are configured to control the projection system to project the projection based on whether the identity or re-identification of the person satisfies a pre-defined criterion.

11. The apparatus according to one of the claims 1 to 10, wherein the one or more processors are configured to control the projection system to project a calibration projection, to determine calibration information based on video data showing the calibration projection, and to control the projection system based on the calibration information.

12. The apparatus according to one of the claims 1 to 11, wherein the one more processors are configured to determine the position of the person and/or the additional information about the person further based on sensor data of one or more further sensors.

13. A system comprising one or more cameras (20), a projection system (30), and the apparatus (10) according to one of the claims 1 to 12.

14. A method for controlling a projection system, the method comprising:

processing (110) video data of one or more cameras to determine a position of a person shown in the video data in an environment; determining (130) a projection target relative to the person based on the position of the person in the environment; obtaining (150) additional information about the person; and controlling (190) a projection system to project a projection onto the projection target, the projection comprising information that depends on the additional information about the person and/or the position of the person.

15. A computer program having a program code for performing the method of claim 14, when the computer program is executed on a computer, a processor, processing circuitry, or a programmable hardware component.

INTERFACE — 12

PROCESSOR — 14

STORAGE DEVICE

10 — 16

20

30

Fig. 1a

| PROCESSING VIDEO DATA TO DETERMINE A POSITION OF A PERSON IN AN ENVIRONMENT |
| --- |

— 110

| DETERMINING A PROJECTION TARGET |
| --- |

— 130

| OBTAINING ADDITIONAL INFORMATION ON THE PERSON |
| --- |

— 150

| CONTROLLING THE PROJECTION SYSTEM TO PROJECT A PROJECTION ONTO THE PROJECTION TARGET |
| --- |

— 190

Fig. 1b

PROCESSING VIDEO DATA TO DETERMINE A
POSITION OF A PERSON IN AN ENVIRONMENT
110

TRACKING THE POSITION OF THE PERSON
115

DETERMINING A POSE OR ORIENTATION OF THE PERSON
120

DETERMINING A POSITION OR ORIENTATION OF A HEAD
125

DETERMINING A PROJECTION TARGET
130

IDENTIFYING OR RE-IDENTIFYING THE PERSON
140

OBTAINING ADDITIONAL INFORMATION ON THE PERSON
150

DETERMIING A DESTINATION OF THE PERSON
155

DETERMINING INFORMATION ON ABILITY OF THE PERSON
160

ADAPTING COLORS, FONT SIZE OR DIOPTER
165

SELECTING A PROJECTOR
170

CONTROLLING A PROJECTION SYSTEM TO
PROJECT A CALIBRATION PROJECTION
180

DETERMINING CALIBRATION INFORMATION
185

CONTROLLING THE PROJECTION SYSTEM TO
PROJECT A PROJECTION ONTO THE PROJECTION TARGET
190

SPATIALLY PRE-DISTORTING THE PROJECTION
195

Fig. 1c

Fig. 2

Fig. 3

PROCESSING VIDEO DATA TO DETERMINE A
POSITION OF A PERSON IN AN ENVIRONMENT

— 110

IDENTIFYING OR RE-IDENTIFYING THE PERSON

— 140

CONTROLLING THE PROJECTION SYSTEM TO
PROJECT A PROJECTION ONTO A PROJECTION TARGET

— 190

## Fig. 4

Europäisches
Patentamt

European
Patent Office

Office européen
des brevets

**EUROPEAN SEARCH REPORT**

Application Number

EP 22 16 5477

## DOCUMENTS CONSIDERED TO BE RELEVANT

| Category | Citation of document with indication, where appropriate, of relevant passages | Relevant to claim | CLASSIFICATION OF THE APPLICATION (IPC) |
|---|---|---|---|
| X | US 2017/026612 A1 (RINTEL EDWARD SEAN LLOYD [GB] ET AL) 26 January 2017 (2017-01-26) | 1,2,5-15 | INV. H04N9/31 G06F3/01 |
| A | * abstract * * paragraph [0029] - paragraph [0036] * * paragraph [0041] - paragraph [0049] * * paragraph [0053] - paragraph [0055] * * figures 3, 4, 6-9 * | 3,4 | G06V20/20 G06V40/16 G09F19/22 G08B13/196 |
| X | US 2019/325556 A1 (LEONG JIAN WEI [US]) 24 October 2019 (2019-10-24) | 1,3,4, 13,14 | |
| A | * abstract * * paragraphs [0004], [0046], [0065] * * paragraph [0074] - paragraph [0082] * * paragraph [0092] - paragraph [0102] * * figures 1, 3, 5, 6 * | 2,5-12 | |
| X | US 9 723 293 B1 (CEDERLOF COLTER E [US]) 1 August 2017 (2017-08-01) | 1,13,14 | |
| A | * abstract * * column 2, line 22 - line 38 * * column 3, line 7 - line 19 * * column 14, line 34 - column 15, line 67 * * figures 1, 8, 9, 10 * | 2-12 | TECHNICAL FIELDS SEARCHED (IPC) H04N G09F G06F G06K G06V G08B |

The present search report has been drawn up for all claims

| Place of search | Date of completion of the search | Examiner |
|---|---|---|
| The Hague | 15 September 2022 | Bouffier, Alexandre |

CATEGORY OF CITED DOCUMENTS

X : particularly relevant if taken alone
Y : particularly relevant if combined with another document of the same category
A : technological background
O : non-written disclosure
P : intermediate document

T : theory or principle underlying the invention
E : earlier patent document, but published on, or after the filing date
D : document cited in the application
L : document cited for other reasons

                               

& : member of the same patent family, corresponding document

EPO FORM 1503 03.82 (P04C01)

## ANNEX TO THE EUROPEAN SEARCH REPORT
## ON EUROPEAN PATENT APPLICATION NO.

**EP 22 16 5477**

This annex lists the patent family members relating to the patent documents cited in the above-mentioned European search report.
The members are as contained in the European Patent Office EDP file on
The European Patent Office is in no way liable for these particulars which are merely given for the purpose of information.

**15-09-2022**

| Patent document cited in search report | | Publication date | Patent family member(s) | | Publication date |
|---|---|---|---|---|---|
| US 2017026612 | A1 | 26-01-2017 | CN | 107852485 A | 27-03-2018 |
| | | | EP | 3326362 A1 | 30-05-2018 |
| | | | US | 2017026612 A1 | 26-01-2017 |
| | | | WO | 2017015067 A1 | 26-01-2017 |
| US 2019325556 | A1 | 24-10-2019 | CN | 112136321 A | 25-12-2020 |
| | | | EP | 3777135 A1 | 17-02-2021 |
| | | | US | 2019325556 A1 | 24-10-2019 |
| | | | US | 2021082083 A1 | 18-03-2021 |
| | | | WO | 2019204384 A1 | 24-10-2019 |
| US 9723293 | B1 | 01-08-2017 | NONE | | |

EPO FORM P0459

For more details about this annex : see Official Journal of the European Patent Office, No. 12/82

**REFERENCES CITED IN THE DESCRIPTION**

*This list of references cited by the applicant is for the reader's convenience only. It does not form part of the European patent document. Even though great care has been taken in compiling the references, errors or omissions cannot be excluded and the EPO disclaims all liability in this regard.*

**Non-patent literature cited in the description**

- **YE et al.** *Deep Learning for Person Re-identification: A Survey and Outlook,* 2020